# EUROPEAN PATENT APPLICATION

(11) **EP 2 269 716 A1**
(43) Date of publication of application: **05.01.2011**
(21) Application number: 10176364.7
(22) Date of filing: 10.07.2007
(51) Int. Cl.: B01D 69/12, B01D 71/44, C08F 30/08, C08F 130/08, C08F 230/08, C08G 61/08, C08G 77/38, C08J 5/18, C08K 5/01, C08K 5/05, C08L 65/00

(54) **Oxygen enrichment membrane and composition for preparing the membrane**

(30) Priority: 13.07.2006 JP 2006193286
(62) Divisional of application: 07112151.1
(71) Applicant: Shin-Etsu Chemical Co., Ltd., Tokyo 100-0004 (JP)
(72) Inventor: Arai, Masatoshi, Annaka-shi Gunma 379-0224 (JP)
(74) Representative: Jansen, Cornelis Marinus

(57) **Abstract**

A composition for preparing a membrane, said composition comprising
(A) a polymer having a number average molecular weight (Mn) of from 10,000 to 5,000,000, as determined by gel permeation chromatography and reduced to polystyrene, and repeating units represented by the following formula (1), 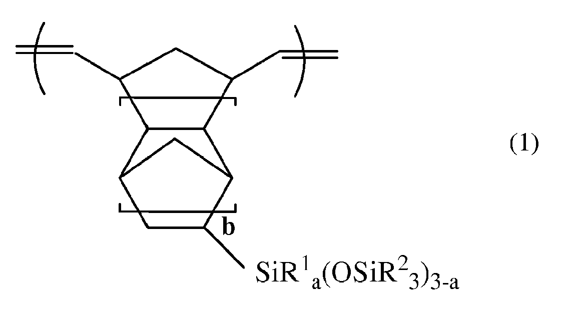 wherein R¹ and R² may be the same or different from each other and are substituted or unsubstituted alkyl groups having 1 to 12 carbon atoms, a is a number of 0, 1, 2 or a mixture thereof, and b is a number of 0, 1, 2 or a mixture thereof,
(B) a hydrocarbon solvent, and
(C) an alcohol having an ethynyl group.

## Description

### FIELD OF THE INVENTION

The present invention relates to a composition to prepare a membrane having high gas permeability and oxygen gas permeability, particularly an oxygen enrichment membrane.

### DESCRIPTION OF THE PRIOR ART

In these days, air conditioners are indispensable to provide comfortable environment to homes and automobiles. Usually, a space where an air conditioner is used is highly hermetically sealed for high energy efficiency. When a man continues working in such a sealed space, he may suffer from oxygen deficiency, leading to decrease in operating efficiency or even to drowsiness, particularly in an automobile, which may cause safety problem. To avoid the problem, an air conditioner provided with an oxygen enrichment membrane permeating oxygen more than nitrogen, or having a selectivity of oxygen gas over nitrogen gas, has been developed, but satisfactory performance has not yet been attained.

It is known that an organosiloxane has good oxygen permeability. However, the organosiloxane itself is not mechanically strong enough for practical use. Copolymers of an organosiloxane are known, for example, a copolymer with polycarbonate from Japanese Patent Application Laid-Open No. H05-261260 and a polysiloxane-aromatic polyamide block copolymer from Japanese Patent Application Laid-Open No. H05-285216. Syntheses of these copolymers, however, are very complicated, and long-term stability of these copolymers is not so good due to hydrolysis. Polymers having organosilicon substituents are also known, for example, a silicon-containing polystyrene from Japanese Patent Application Laid-Open No. H04-88004, a silicon-containing polystilbene from Japanese Patent Application Laid-Open No. H08-198881, and a silicon-containing cellulose from Japanese Patent Application Laid-Open No.2001-79375. However, none of them meet all the requirements of high oxygen permeability, oxygen gas selectivity over nitrogen gas, and mechanical strength.

### SUMMARY OF THE INVENTION

As a result of extensive studies to solve the problem, the present inventor invented a polymer and a cast film thereof, as disclosed in the patent applications, Japanese Patent Application No. 2006-117977, and EP Application No.07106552.8. The cast film is easy to industrially produce, and has good gas permeability and high selectivity of oxygen gas over nitrogen gas.

An object of the present invention is to improve gas permeability of the film.

To improve gas permeability, one may reduce thickness of the film. A thin film or membrane is generally prepared by the water surface spreading method where a polymer dissolved in a solvent is dropped and spread on water surface, and then the solvent is allowed to evaporate. In the method, a spreader agent such as phosphate type anionic surfactant and polyfumaric acid ester is used. However, it has been found to be difficult to prepare a thin film of the aforesaid novel polymer because it does not spread even when the aforesaid spreader agent is used.

After extensive studies, the present inventor has found that a membrane of the polymer can be prepared by using an alcohol having an ethynyl group as a spreader. The film so prepared has not only high selectivity of oxygen gas over nitrogen gas but also high gas permeability.

Disclosed herein is a membrane comprising a polymer having repeating units represented by the following formula (1): 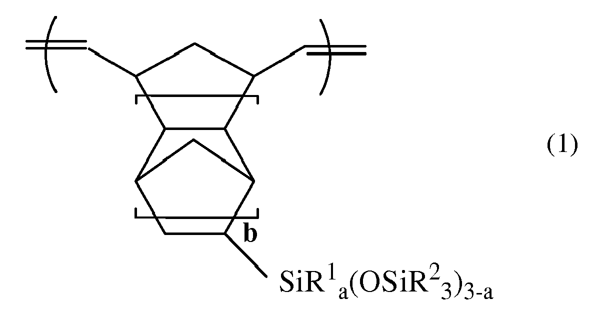 wherein R¹ and R² may be the same or different from each other and are substituted or unsubstituted alkyl groups having 1 to 12 carbon atoms, a is a number of 0, 1, 2 or a mixture thereof, and b is a number of 0, 1, 2 or a mixture thereof.

Further disclosed herein is a composite membrane comprising a porous support membrane and the aforesaid film laminated on the porous support membrane.

The present invention is a composition for preparing a membrane comprising
(A) a polymer having a number average molecular weight (Mn) of from 10,000 to 5,000,000, as determined by gel permeation chromatography and reduced to polystyrene, and repeating units represented by the above formula (1),
(B) a hydrocarbon solvent, and
(C) an alcohol having an ethynyl group.

The membrane has excellent gas permeability, oxygen gas selectivity over nitrogen gas so as to be useful for preparing an oxygen enrichment membrane.

### DESCRIPTION OF THE PREFERRED EMBODIMENTS

In the above formula (1), examples of R¹ and R² include methyl, ethyl, n-propyl, butyl, pentyl groups and fluorinated groups thereof, among which methyl group is preferred.

The number, a, is 0, 1, 2 or a mixture thereof. That is, the polymer may have a mixture of a repeating unit with a being 0 and the unit with a being 1. Preferably, a is 0, 1, or a mixture thereof, and most preferably 0, because of good oxygen permeability. The number, b, is 0, 1, 2 or a mixture thereof. Preferably, b is 0, 1, or a mixture thereof, and most preferably 0, because of good polymerization property.

The aforesaid repeating unit of the formula (1) can be derived from the organosilicon compound represented by the following formula (3): 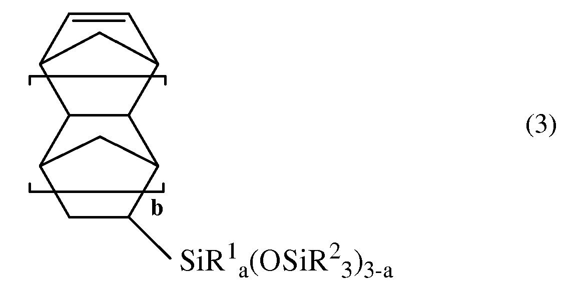 wherein R¹, R², a and b are as defined above.

Examples of the organosilicon compound of the formula (3) are as shown below, wherein Me represents a methyl group. A mixture of these compounds may be used.

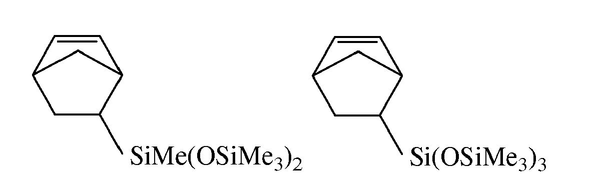

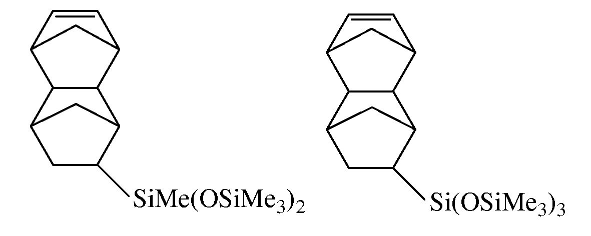

The organosilicon compound can be prepared by subjecting the polysiloxane of the following formula having a vinyl group and cyclopentadiene to Diels-Alder reaction. Details of the preparation will be described later in Examples.

(CH₂=CH) SiR¹ₐ(OSiR²)₃₋ₐ

The polymer underlying the composition of the present invention can be obtained by subjecting the organosilicon compound of the formula (3) to a metathesis polymerization. The metathesis polymerization can be performed in a usual manner, for example, by dissolving monomers in an aromatic hydrocarbon solvent such as toluene and xylene, and polymerizing the monomers in the presence of a polymerization catalyst at a temperature of from 40 to 60°C and at an atmospheric pressure in nitrogen atmosphere while stirring. As the polymerization catalyst, a generally used radical polymerization catalyst can be used, for example, various kinds of peroxides, Ziegler catalysts, metallocene catalysts, and carbene-type catalysts such as tungsten catalyst or ruthenium catalyst. Preferably, Grubbs catalyst 1st Generation, Grubbs catalyst 2nd Generation, or Hoveyda-Grubbs catalyst is used. The catalyst may be used in an amount of from 1 to 1000 ppm, preferably from 5 to 500 ppm based on a weight of the monomer. With less than 5 ppm of the catalyst, the polymerization proceeds impractically slowly. On the other hand, with more than 500 ppm of the catalyst, production costs would be high and moreover scission reaction of a polymer may occur, causing gelation of the polymer.

In addition to the organosilicon compound of the formula (3), another olefin compound may be used as a co-monomer which is subjected to an addition polymerization or metathesis polymerization. Examples of the olefin compound include aliphatic olefins such as ethylene and propylene; norbornenyl alicyclic olefins; aromatic olefins such as styrene, α-methylstyrene and stilbene; and acrylic acid esters such as methyl acrylate and butyl methacrylate. Preferably, the alicyclic organic compound which can ring-open to polymerize, for example, the one represented by the following formula (4) is used. By using the organic compound, a polymer having, in addition to the repeating units of the formula (1), the repeating unit of the formula (2) can be prepared: 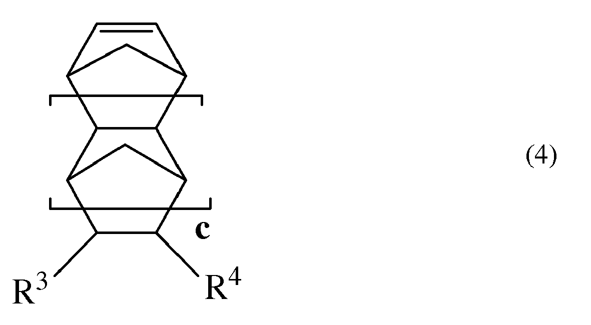 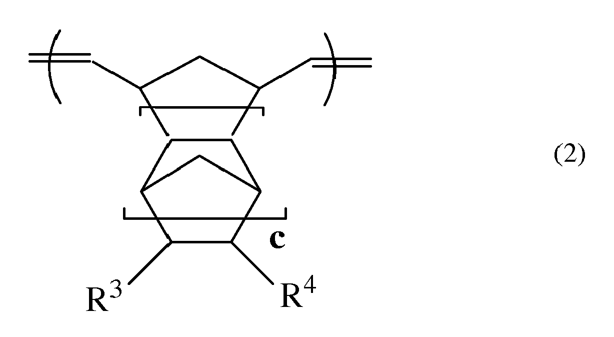 wherein R³ and R⁴ may be the same or different from each other and are hydrogen atoms or monovalent organic groups, for example, alkyl, aryl, or alkylalkoxycarbonyl groups each having 1 to 7 carbon atoms. Preferably, R³ and R⁴ are hydrogen atoms or methyl groups because of good oxygen permeability. The number, c, is 0, 1, 2 or a mixture thereof. For the reason of good polymerization property, c is preferably 0, 1 or a mixture thereof, among which 0 is most preferred.

Examples of the alicyclic organic compound of the formula (4) are as shown below.

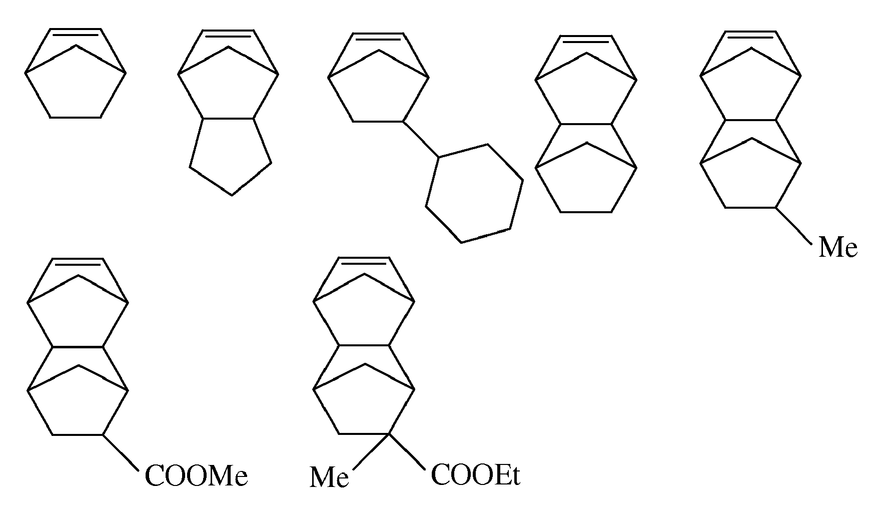

An amount of the co-monomer to be used can be varied depending on an intended degree of oxygen gas permeability. For an oxygen enrichment membrane application and oxygen permeability, the co-monomer may be used in an amount of 0 to 2.0 parts by weight per 100 parts by weight of the compound of the formula (3). Polymerization catalyst and conditions may be the same as those employed when no co-monomer is used.

In the composition of the present invention, the polymer (A) has a number average molecular weight (Mn) of from 10,000 to 5,000,000, preferably from 50,000 to 500,000, as determined by gel permeation chromatography (GPC) using polystyrene standards. A polymer having a Mn below the aforesaid lower limit tends to lack sufficient mechanical strength, and the one with a Mn above the aforesaid upper limit tends to lack film-forming property. Preferably, the polymer has a dispersion (Mw/Mn) of from 2 to 4.

In the composition of the present invention, the hydrocarbon solvent (B) may be any solvent which can dissolve the polymer (A). A part of the hydrogen atoms of the solvent (B) may be replaced with halogen atoms. The solvent preferably has low boiling point so as to evaporate rapidly after the composition has been spread on a surface of water. Examples of the solvent (B) include cyclohexane, n-hexane, benzene, toluene, xylene, and butyl chloride, among which cyclohexane and toluene are preferred.

The hydrocarbon solvent (B) is typically incorporated in the composition in an amount of from 1 to 500 parts by weight, preferably from 10 to 150 parts by weight per part by weight of component (A), though the amount can be varied depending on a molecular weight of component (A). If the amount is below the aforesaid lower limit, a solid concentration of such a composition is too high to form a thin membrane or to handle with ease. If the amount is above the aforesaid upper limit, a membrane spread on water surface may be too thin to be transferred to a support membrane. When the component (B) is a mixture of two or more of the solvents, the mixing ratio can be adjusted according to an intended evaporation speed on a water surface.

In the composition of the present invention, component (C) is an alcohol having an ethynyl group or acetylene group, hereinafter referred to acetylene alcohol. The acetylene alcohol preferably has 3 to 60, more preferably 5 to 22, carbon atoms. When a mixture of the components (A), (B) and (C) is dropped on a water surface, it spreads instantaneously to form a satisfactorily thin and uniform membrane. The following are examples of the component (C), all available from Nisshin Chemical Industry Co., Ltd.

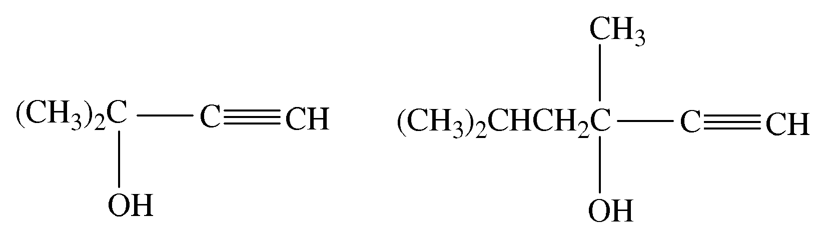

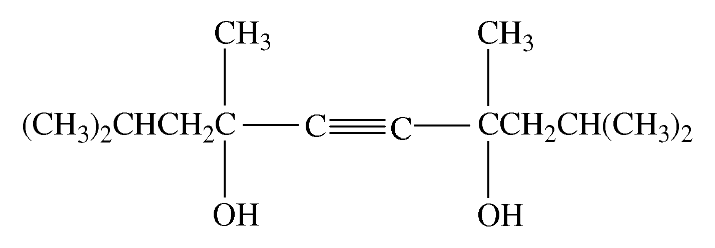

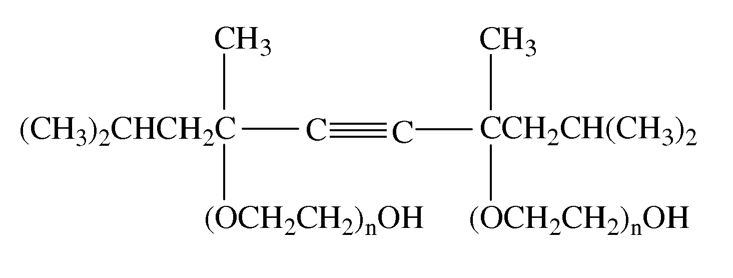

In the above formulas, n is an integer of from 1 to 10.

The component(C) is incorporated in the composition in an amount of from 0.1 to 10 parts by weight, preferably from 0.5 to 5 parts by weight, per total 100 parts by weight of the components (A) and (B). If the amount is below the aforesaid lower limit, a uniformly thin film may not be formed on water surface. If the amount is above the aforesaid upper limit, mechanical strength of a membrane is not strong enough for practical uses.

A membrane obtained by spreading the composition comprising the components (A) to (C) on a water surface can subsequently be combined with various kinds of porous membranes to form a composite membrane with excellent gas permeability and oxygen gas selectivity over nitrogen gas. The present composition can further comprise other components, in an amount so as to not to adversely affect the composition, such as an adhesion aid to promote adhesion of the membrane to a porous membrane and an antioxidant. The thickness of the membrane can be varied according to desired gas permeability. Typically, an upper limit of an average thickness of the membrane is 0.3 µm, more typically 0.1 µm. There is no lower limit, but a membrane thinner than 0.01 µm is practically difficult to prepare.

The composite membrane can be prepared by spreading the composition comprising the components (A) to (C) and an optional component as desired on a water surface, evaporating the solvent (B), and then transferring the obtained membrane, hereinafter referred to as a separation membrane, to a surface of a porous support membrane. One or more separation membranes can be laminated on the separation membrane. If necessary, a protective membrane comprising a siloxane polymer can be laminated on the separation membrane. The protective membrane can be prepared in the same manner as described above. That is, a solution of the siloxane polymer is spread on a water surface followed by evaporation of the solvent, and then the membrane obtained is transferred onto the separation membrane.

As the porous support membrane, porous membranes commonly used for gas separation composite membranes can be used such as those comprising one or more polymers selected from the group consisting of polyethylene, polypropylene, polysulfone, polyether sulfone, polystyrene, polyethylene terephthalate, and polyimide. Preferably, the porous support membrane is composed of a polymer selected from the group consisting of polypropylene, polyethersulfone, and polyimide. The support membrane may be in the form of a flat membrane, tubular membrane or a hollow fiber membrane, and may be those formed on a woven or nonwoven cloth. A thickness of the porous support membrane can be selected according to handling property or the like, but typically ranges from 10 to 300 µm, more typically from 20 to 100 µm.

The aforesaid protective membrane can be prepared from a copolymer of a siloxane compound and styrene. Alternatively, a quick-drying dealcohol reaction type adhesive sealing agent, a solvent type silicone releasing agent or a blend thereof may be applied as a protective layer to the separation membrane.

### EXAMPLES

The present invention will be explained with reference to the following Examples, but not limited thereto.

### Monomer Preparation Example 1

In a 100 ml of a reactor, 13 g (0.10 mol) of dicyclopentadiene, and 50 g(0.20 mol) bistrimethylsiloxy-methylvinylsilane were placed which were subjected to a reaction at a temperature of from 160 to 175 °C for 4 hours under nitrogen gas flow. The reaction mixture obtained was subjected to vacuum distillation to obtain 37 g of a fraction at a temperature of from 97 to 102 °C and at 9mm Hg. The fraction had a refractive index (n_{D}²⁵) of 1.444. Structural analyses of the fraction with a ¹H-NMR spectrometer, LAMBDA LA-300W, ex JEOL Ltd., and a FT-IR spectrometer, Spectrum One, ex PerkinElmer Inc., and quantitative analysis by gas chromatography based on a peak area ratio, as determined with a gas chromatograph, GC-14B, ex Shimadzu Co., of the fraction found that the fraction was a mixture of 89 mol% of the following compound, 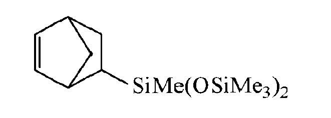 and 11 mol% of the following compound.

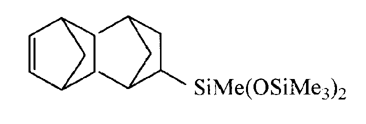

The fraction obtained will be hereinafter referred to as Monomer Mixture A.

### Monomer Preparation Example 2

In a 500 ml of a reactor, 132 g (1.00 mol) of dicyclopentadiene, and 322 g(1.00 mol) of tristrimethylsiloxy-vinylsilane were placed which were subjected to a reaction at a temperature of from 160 to 175 °C for 4 hours under nitrogen gas seal. The reaction mixture obtained was subjected to vacuum distillation to obtain 220 g of a fraction at a temperature of from 118 to 120 °C and at 5mm Hg. Structural analyses of the fraction with a ¹H-NMR spectrometer, LAMBDA LA-300W, ex JEOL Ltd., and a FT-IR spectrometer, Spectrum One, ex PerkinElmer Inc., and quantitative analysis by gas chromatography based on a peak area ratio, as determined with a gas chromatograph, C-14B, ex Shimadzu Co., of the fraction found that the fraction was a mixture of 95 % of the following compound, 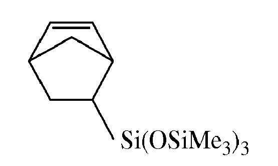 and 5 % of the following compound.

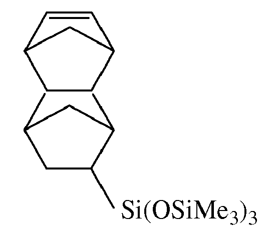

The fraction obtained will be hereinafter referred to as Monomer Mixture B.

### Polymer Preparation Example 1

In a Schlenk flask provided with a three way cock, 4.1 mg(0.005 mmol) of a Grubbs catalyst 1st Generation(Ru catalyst) was placed and the flask was purged with Ar(or N₂) gas. To the flask, 5 ml of toluene was added to make a solution of the catalyst and then the flask was put in an oven kept at 40 °C. Separately, a 100 ml eggplant type flask provided with a stirrer and a three way cock was purged with Ar(or N₂) gas, in which 1.57g(5.0 mmol) of Monomer Mixture A prepared in Preparation Example 1 and 45 ml of toluene were placed to prepare a solution of the monomer mixture. After stirring the solution to uniformly disperse the monomer mixture, the eggplant type flask was put in the oven kept at 40 °C. When a temperature of the monomer solution reached to about 40 °C, the Schlenk flask and the eggplant type flask were taken out from the oven. To the monomer solution, the catalyst solution was added via a syringe while stirring. After the catalyst solution was uniformly mixed with the monomer solution, the eggplant type flask was put in the oven. Twenty minutes later, 1 ml of ethylvinylether was added to the eggplant type flask to stop polymerization and stirred for 5 minutes. Subsequently, the solution in the eggplant type flask was slowly dropped in 100 ml of methanol while stirring. A polymer was precipitated which was then isolated by filtration and dried. The polymer obtained, hereinafter referred to as Polymer A, weighed 1.5 g, corresponding to a reaction yield of 96%. The polymer had a Mn of 114,300, and a Mw/Mn of 2.74, as determined with a gel permeation chromatograph, Chromatography 10A series, ex Shimadzu Co., using polystyrene standards.

### Polymer Preparation Example 2

A polymer was prepared in the same manner as in Example 1 except that 1.94 g (5.0 mmol) of Monomer Mixture B was used in place of Monomer Mixture A. The polymer obtained, hereinafter referred to as Polymer B, weighed 1.9g, corresponding to a reaction yield of 96%. The polymer had a Mn of 123,300, and a Mw/Mn of 3.96, as determined with a gel permeation chromatograph, Chromatography 10A series, ex Shimadzu Co. using polystyrene standards.

### Polymer Preparation Example 3

A polymer was prepared in the same manner as in Example 1 except that 1.0 g (2.6 mmol) of Monomer Mixture B and 1.0g of tetracyclo[6.2.1.1^{3,6}.0^{2,7}]dodeca-4-ene of the following formula: 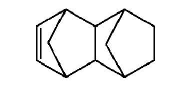 was used in place of Monomer Mixture A. The polymer obtained, hereinafter referred to as Polymer C, weighed 1.9g, corresponding to a reaction yield of 96%. The polymer had a Mn of 156,000, and a Mw/Mn of 3.12, as determined with a gel permeation chromatograph, Chromatography 10A series, ex Shimadzu Co. using polystyrene standards.

### Examples 1 to 3 and Referential Examples 1 to 3

The compositions were prepared according to the recipes, expressed in parts by weight, as shown in Table 1. One drop, which weighs about 0.02g, of composition was spread over a surface of pure water which was allowed to stand while the solvent evaporated. A thin membrane having an average thickness of from 0.05 to 0.13 µm was obtained.

Subsequently, the membrane was transferred onto a 80-µm thick polypropylene porous support membrane to form an oxygen enrichment membrane.

A diameter and a thickness of the thin membranes are as shown in Table 1.

Oxygen and nitrogen gas permeability coefficients of the enrichment membrane as shown in Table 2 were determined at 25 °C with a gas permeability meter manufactured by Rika Seiki Kogyo K.K.

As the component (C), the following acetylene alcohol A or B was used.

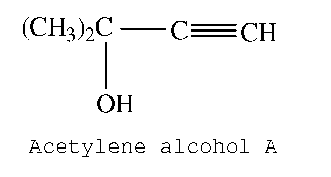

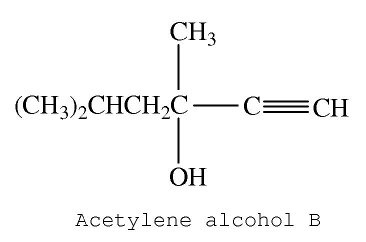

**Table 1**

| | Example 1 | Example 2 | Example 3 | Referential Example 1 | Referential Example 2 | Referential Example 3 |
|---|---|---|---|---|---|---|
| Polymer A | 2 | | | 2 | 2 | |
| Polymer B | | 4 | | | | 4 |
| Polymer C | | | 6 | | | |
| Cyclohexane | 98 | | 94 | 98 | 98 | |
| Toluene | | 96 | | | | 96 |
| Phosphate type anionic surfactant | | | | | 1.0 | |
| Acetylene alcohol A | 1.5 | | 2.0 | | | |
| Acetylene alcohol B | | 0.5 | | | | |
| Diameter of membrane (cm) | 5.0 | 4.5 | 5.5 | Not spread | Not spread | Not spread |
| Thickness of membrane (nanometer) | 50 | 95 | 130 | - | - | - |

| | Gas permeability coefficient (p) | | |
|---|---|---|---|
| | O₂ | N₂ | ρ (O₂) /ρ (N₂) |
| Example 1 | 63×10⁵ | 26×10⁵ | 2.4 |
| Example 2 | 127×10⁵ | 60×10⁵ | 2.1 |
| Example 3 | 90×10⁵ | 47×10⁵ | 1.9 |
| Referential Example 3* | 0.14×10⁵ | 0.045×10⁵ | 3.1 |

| | | | |
|---|---|---|---|
| The unit of gas permeability coefficient : cc(STP)/(m²) (hr) (atm) * A membrane could not be obtained by the water surface spreading method. Instead, a cast film was prepared by casting the composition on a glass plate and then evaporating the solvent. The cast film had a thickness of 55µm, as measured with a dial gage. Gas permeability coefficients of the cast film were measured in the same manner as described above. | | | |

The compositions of Referential Examples 1 to 3 without the component (C) could not be spread over a water surface. The cast film prepared from the composition of Referential Example 3 was as thick as 55 µm and accordingly its gas permeability was low, although its oxygen gas selectivity over nitrogen gas was high. The compositions of Examples 1 to 3, on the other hand, could be spread very well on a water surface and the membranes obtained had high gas permeability and oxygen gas selectivity.

Thus, the composite membrane prepared using the composition of the present invention is suitable for an oxygen enrichment membrane used in air conditioners or fuel cells.

## Claims

1. A composition for preparing a membrane, said composition comprising
(A) a polymer having a number average molecular weight (Mn) of from 10,000 to 5,000,000, as determined by gel permeation chromatography and reduced to polystyrene, and repeating units represented by the following formula (1), 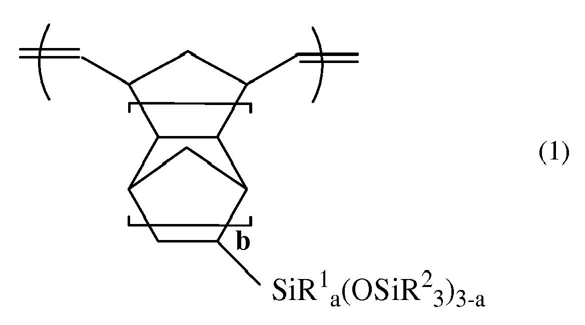 wherein R¹ and R² may be the same or different from each other and are substituted or unsubstituted alkyl groups having 1 to 12 carbon atoms, a is a number of 0, 1, 2 or a mixture thereof, and b is a number of 0, 1, 2 or a mixture thereof,
(B) a hydrocarbon solvent, and
(C) an alcohol having an ethynyl group.

2. The composition according to claim 1, wherein the composition comprises 1 to 500 parts by weight of the component (B) per part by weight of component (A), and 0.1 to 10 parts by weight of the component (C) per total 100 parts by weight of the components (A) and (B).

3. The composition according to claim 1 or 2, wherein the polymer further has repeating units represented by the following formula (2): 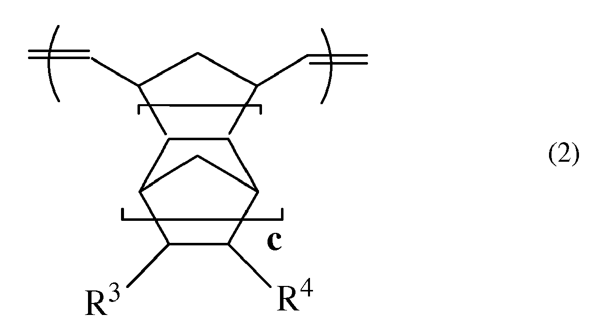 wherein R³ and R⁴ may be the same or different from each other and are hydrogen atoms or monovalent organic groups, and c is a number of 0, 1, 2 or a mixture thereof.

4. The composition according to any one of claims 1 to 3, wherein R¹ and R² are methyl groups and a is 1.

5. The composition according to any one of claims 1 to 3, wherein R¹ and R² are methyl groups and a is 0.

6. The composition according to any one of claims 3 to 5, wherein R³ and R⁴ are hydrogen atoms and c is 0.

7. The composition according to any one of claims 1 to 6, wherein the polymer has a number average molecular weight (Mn), reduced to polystyrene, of from 50,000 to 500,000 and a dispersion (Mw/Mn) of from 2 to 4.

8. A method of preparing a composite membrane, said method comprising the steps of
( 1) spreading a predetermined amount of the composition according to any one of claims 1 to 7 on a surface of water,
( 2) evaporating the solvent to form a thin membrane, and
( 3) transferring the thin membrane to a surface of a porous support membrane to laminate the thin membrane on the porous support membrane.
